# EUROPEAN PATENT SPECIFICATION

(11) **EP 3 060 015 B1**
(45) Date of publication and mention of the grant of the patent: **23.03.2022**
(21) Application number: 14800801.4
(22) Date of filing: 23.05.2014
(51) Int. Cl.: H04W 52/14, H04W 52/34, H04W 52/60

(54) **METHOD AND DEVICE FOR CONTROLLING DOWNLINK POWER**
VERFAHREN UND VORRICHTUNG ZUR DOWNLINK-LEISTUNGSSTEUERUNG
PROCÉDÉ ET DISPOSITIF DE COMMANDE DE PUISSANCE DE LIAISON DESCENDANTE

(30) Priority: 17.10.2013 CN 201310487280
(43) Date of publication of application: 24.08.2016
(73) Proprietor: ZTE Corporation, Shenzhen, Guangdong 518057 (CN)
(72) Inventor: SONG, Tingshan, Shenzhen Guangdong 518057 (CN); SUN, Yi, Shenzhen Guangdong 518057 (CN); YOU, Jia, Shenzhen Guangdong 518057 (CN); ZHAN, Xinsheng, Shenzhen Guangdong 518057 (CN)
(74) Representative: Iannone, Carlo Luigi
(86) International application number: PCT/CN2014/078341
(87) International publication number: WO 2014/187368

(56) References cited:
- WO-A1-2006/065183
- WO-A1-2013/063832
- CN-A- 1 681 222
- CN-A- 101 072 056
- CN-A- 102 647 778
- US-A1- 2010 203 917

## Description

### Technical Field

The present disclosure relates to the technical field of Wide Code Division Multiple Access (WCDMA) system, and in particular to a method and device for controlling downlink power.

### Background

In a WCDMA system, due to Code Division Multiple Access (CDMA), each code is not completely orthogonal to one another; therefore, multiple access interference exits. Besides direct influences from the multiple access interference, edge effect exists in downlink; due to the blocking of large buildings, shadow effect is formed in radio wave propagation, thereby resulting in slow fading. The above factors will cause reduction in system capacity and narrowing down in actual communication service scope; therefore, power control is the most effective method to solve these problems.

In the WCDMA system, downlink power control is to control the transmitting power of the base station, which is divided into open loop power control and closed loop power control. In the closed loop power control, a mobile station User Equipment (UE) performs, according to the Block Error Rate (BLER) of a downlink transmitting channel, outer-loop power control to adjust the Signal to Interference Ratio target (SIR target) of the UE, so as to make the BLER meet the Quality of Service (QoS); in the inner-loop power control, the UE generates a Downlink Transmitting power Control (DL_TPC) command according to the SIR target provided by the outer-loop and according to the Dedicated Physical Control Channel Signal to Interference Ratio (DPCCH_SIR) estimated by the UE according to the quality of the Downlink Dedicated Physical Control Channel (DL_DPCCH), and transmits the DL_TPC command to the base station NODEB through an uplink DPCCH channel; then, the base station NODEB adjusts the transmitting power of the Downlink Dedicated Physical Channel (DL_DPCH) according to the decoded TPC command.

Existing technical schemes have no definite regulations for the usage of the downlink power control mode, and mostly adopt a static configuration mode, that is, once corresponding parameters are configured in the background by a network management system, a Radio Network Controller (RNC) at the radio network side will take the value corresponding to the parameter as the power control manner for the DL-DPCH at any time; this static power control mode is simple in processing and does not consider the changes in the complex scene of the present network and service performance probably cannot be ensured once network load changes.

Patent Application WO2013/063832 discloses a method that involves determining whether a congestion status of a serving cell is changed based on rise over thermal measurement. A signaling is sent to indicate the change of the congestion status to a set of user equipments. An uplink congestion control is performed based on the RoT measurement and with enhanced transmission format combination reselection by one of the UEs based on the signaling, where the signaling indicates congestion if the serving cell enters congestion during receiving a last RoT measurement.

Patent application US 2010/203917 relates to techniques used to determine a transmitter power level of a mobile station based on spectrum efficiency gain and loss. Spectrum efficiency gain is measured for a home sector base station. In one example, a base station transmits information such as noise plus interference level to a mobile station and the mobile station determines the transmitter power level.

### Summary

The invention is defined by the appended independent claims. Dependent claims constitute embodiments of the invention.

The present disclosure solves the problems that the existing downlink power control mode is simple in processing and does not consider the changes in the complex scene of the present network and that service performance probably cannot be ensured once network load changes.

With the method and device for controlling downlink power provided in the present disclosure, different power control manners are adopted according to a downlink load condition of a cell. When the downlink load is lighter, a mobile station receives a relatively better wireless signal; the adoption of a fast power control manner in which a shorter time interval is needed for a TPC command to take effect can ensure the quality of service well. When the downlink load is heavier, due to a downlink interface reason, the mobile station receives a relatively worse wireless signal; at this time, the adoption of a slow power control manner in which a longer time interval is needed for the TPC command to take effect can effectively reduce the downlink interference and meanwhile improve the network capacity.

### Brief Description of the Drawings

Accompanying drawings which are described below to provide a better understanding to the present disclosure constitute one part of the application; the schematic embodiments of the present disclosure and the description thereof are used to illustrate the present disclosure but to limit the present disclosure improperly. In the accompanying drawings:
Fig. 1 is a flowchart of a method for controlling downlink power according to the first embodiment of the present disclosure;
Fig. 2 is a structure diagram of a device for controlling downlink power according to the second embodiment of the present disclosure;
Fig. 3 is a flowchart of a method for controlling downlink power of a base station according to an application example of the present disclosure; and
Fig. 4 is a flowchart of a system for controlling downlink power of a base station according to an application example of the present disclosure.

### Detailed Description of the Embodiments

To further illustrate the technical means adopted by the present disclosure to achieve an expected purpose and the achievements achieved thereby, the present disclosure is described below in detail in conjunction with accompanying drawings and preferred embodiments. It should be noted that the embodiments in the application and the characteristics in the embodiments can be combined if no conflict is caused.

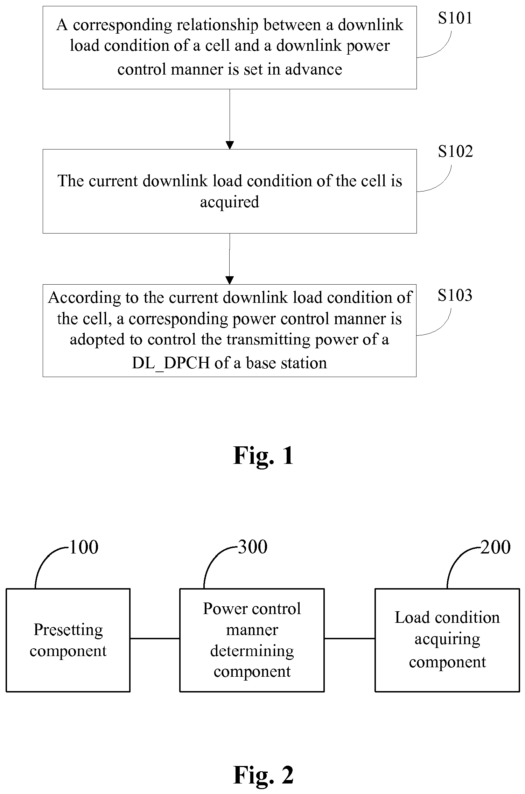

In the first embodiment of the present disclosure, a method for controlling downlink power as shown in Fig. 1 includes the following steps:
S101: a corresponding relationship between a downlink load condition of a cell and a downlink power control manner is set in advance.

Specifically, the downlink load condition of the cell refers to: a proportion of the carrier transmitting power of at least one non-H channel of the cell to maximum transmitting power of the cell;

A time interval, needed for a corresponding TPC command to take effect, is set to increase as growth of the proportion of the carrier transmitting power of the at least one non-H channel of the cell to the maximum transmitting power of the cell (that is, the increase of the downlink load of the cell), an odd number of time slots is set for the time interval needed for the TPC command to take effect, and the TPC command occupying the majority within the time interval, needed for the TPC command to take effect, is taken as the final TPC command.

It is well known in this field that the mobile station will fill a TPC command bit in each timeslot of the UL-DPCH, and the base station can demodulate the TPC command from each timeslot. In the TPC command, 0 represents decrease, 1 represents increase. In the following process, an odd number of timeslots of TPC commands can be merged according to a determined downlink power control manner, and the TPC command occupying the majority within the time interval, needed for the TPC command to take effect, is taken as the final TPC command. For example, TPC commands of every 3 timeslots are merged to take effect, which refers merging 0 or 1 in the TPC commands of the 3 timeslots, when a merged result is 0/1/0, since 0 occupying the majority, then the merged TPC command is 0, that is, starting from the third timeslot, the base station is required to decrease a step of power; when the merged result is 1/1/1, then the merged TPC command is 1, that is, starting from the third timeslot, the base station is required to increase a step of power.

S102: the current downlink load condition of the cell is acquired.

Specifically, for all cells, from the base station, the current carrier transmitting power of the at least one non-H channel of the cell and a preset maximum transmitting power of the cell are acquired, the proportion of the current carrier transmitting power of the at least one non-H channel of the cell to the preset maximum transmitting power of the cell is taken as the current downlink load condition of the cell.

The process for determining the carrier transmitting power of the at least one non-H channel of the cell includes:
from the base station, real-time carrier transmitting power of the cell and carrier transmitting power of at least one H channel of the cell are acquired;
the carrier transmitting power of the at least one H channel of the cell is subtracted from the real-time carrier transmitting power of the cell to obtain the carrier transmitting power of the at least one non-H channel of the cell.

In the embodiment of the present disclosure, technical contents well known to those skilled in the art are as follows: each base station covers multiple corresponding cells. For all cells, the base station is the concept of a whole; the carrier transmitting power of a cell can be understood as: the carrier power transmitted by the base station towards the cell. The carrier transmitting power of the cell also can be divided into the carrier transmitting power of an H channel of the cell and the carrier transmitting power of a non-H channel of the cell; here, H can be understood as high speed; the carrier transmitting power of the H channel of the cell generally refers to the carrier transmitting power of services or data, including: the transmitting power of High-Speed Dedicated Physical Control Channel (HS-DPCCH), High-Speed Downlink Shared Channel (HS-DPDCH), E-DCH Absolute Grant Channel (E-AGCH), E-DCH HARQ Indicator Channel (E-HICH) and E-DCH Relative Grant Channel (E-RGCH), in which, HS-DPCCH transmitting power and HS-DPDCH transmitting power both belong to High Speed Downlink Packet Access (HSDPA) data services, E-AGCH, E-HICH transmitting power and E-RGCH transmitting power all belong to High Speed Uplink Packet Access (HSUPA) data services. The real-time carrier transmitting power of the at least one H channel of the cell and the real-time carrier transmitting power of the cell (Transmitted Carrier Power of All Codes) both can be acquired by the base station. The real-time carrier transmitting power of the cell reflects the real-time total carrier transmitting power of the cell.

Likewise, for all cells, the base station is the concept of a whole; the maximum transmitting power of the cell can be understood as: the maximum power transmitted by the base station towards the cell, which is preset according to physical parameters of the base station such as the type of the base station.

S103: according to the current downlink load condition of the cell, a corresponding power control manner is adopted to control the transmitting power of a DL_DPCH of the base station.

Specifically, a corresponding downlink power control manner is determined according to the current downlink load condition of the cell, that is, the proportion of the current carrier transmitting power of at least one non-H channel of the cell to the maximum transmitting power of the cell, to control the transmitting power of the DL_DPCH of the base station.

In the second embodiment of the present disclosure, a power control device is provided, which is located in an RNC or in a base station and as shown in Fig. 2, the device includes:
1) a presetting component 100, which is configured to set in advance a corresponding relationship between the downlink load condition of a cell and the downlink power control manner.

Specifically, the downlink load condition of the cell refers to: the proportion of the carrier transmitting power of at least one non-H channel of the cell to the maximum transmitting power of the cell;
the presetting component 100 sets the time interval, needed for a corresponding TPC command to take effect, to increase as the growth of the proportion of the carrier transmitting power of the at least one non-H channel of the cell to the maximum transmitting power of the cell (that is, the increase of the downlink load of the cell), sets an odd number of time slots for the time interval needed for the TPC command to take effect, and takes a TPC command occupying a majority within the time interval, needed for the TPC command to take effect, as a final TPC command to take effect.

2) a load condition acquiring component 200, which is configured to acquire for all cells, from the base station, the current carrier transmitting power of a non-H channel of the cell and preset maximum transmitting power of the cell, and to take a proportion of the current carrier transmitting power of the at least one non-H channel of the cell to the preset maximum transmitting power of the cell as the current downlink load condition of the cell.

Specifically, the load condition acquiring component 200 is further configured to: acquire, from the base station, real-time carrier transmitting power of the cell and the carrier transmitting power of at least one H channel of the cell; subtract the carrier transmitting power of the H channel of the cell from the real-time carrier transmitting power of the cell to obtain the carrier transmitting power of the at least one non-H channel of the cell.

3) a power control manner determining component 300, which is configured to adopt, according to the current downlink load condition of the cell, a corresponding power control manner to control the transmitting power of a DL_DPCH of the base station.

Specifically, the power control manner determining component 300 is further configured to determine a corresponding downlink power control manner according to the proportion of the current carrier transmitting power of the at least one non-H channel of the cell to the maximum transmitting power of the cell, to control the transmitting power of the DL_DPCH of the base station.

Based on the above embodiments, an application example of the present disclosure is provided below.

The embodiment of the present disclosure provides a method and device for controlling downlink power of a base station. A Radio Network Subsystem (RNS) at the radio network side can be understood as integrate including an RNC and a base station NodeB; the RNS adopts different downlink power control manners according to different thresholds that the current downlink load of a cell meets. The method to adjust the downlink power control manner in time according to the downlink load condition can well ensure the QoS, effectively reduce the downlink interference, improve the quality of radio signals received by the mobile station UE and meanwhile improve the system capacity.

For a bettering understanding of the technical schemes and advantages of the application example, the method for controlling downlink power of a base station is described below in further detail in conjunction with Fig. 1.

Step 10: an RNS acquires the carrier transmitting power of at least one non-H channel of a cell.

Step 20: the downlink load condition of the cell is determined according to the proportion of the carrier transmitting power of the at least one non-H channel of the cell to the preset maximum transmitting power of the cell.

Specifically, when the downlink load is less than 75%, Step 30 is executed; when the downlink load is greater than or equal to 75%, but less than 90%, Step 40 is executed; when the downlink load is greater than or equal to 90%, Step 50 is executed.

Step 30: it is indicated that the load of the cell is light, and a fast power control manner is adopted; a TPC command in each timeslot acts on the DL-DPCH.

Step 40: it is indicated that the load of the cell is relatively high, and a slow power control manner is adopted; TPC commands every 3 timeslots are merged to act on the DL-DPCH.

Step 50: it is indicated that the load of the cell is high, and a slow power control manner is adopted; TPC commands every 5 timeslots are merged to act on the DL-DPCH.

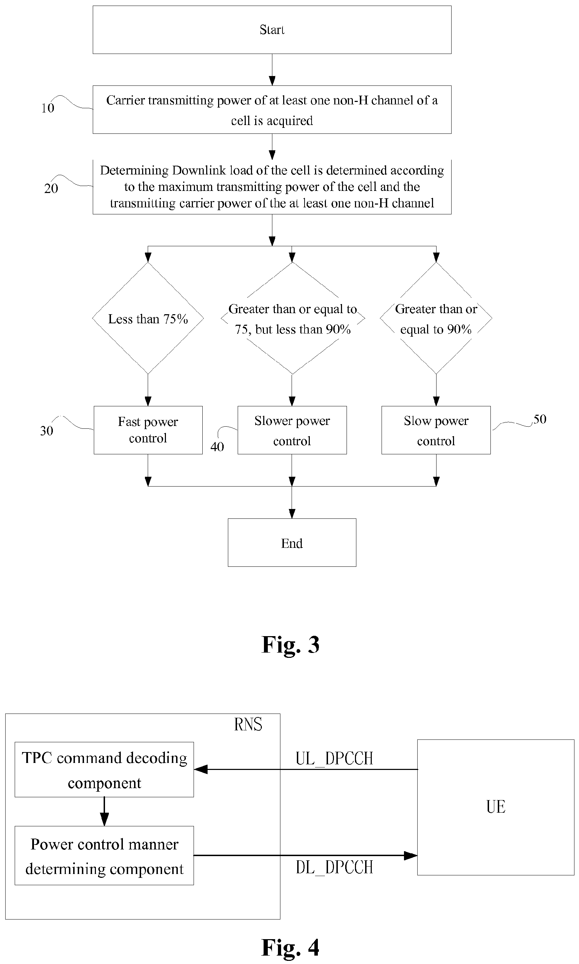

Fig. 4 is a flowchart of a system for controlling downlink power of a base station according to an application example of the present disclosure. The system includes: an RNS and a UE, wherein a TPC command decoding component in the RNS is configured to decode out a TPC command in each timeslot on the UL-DPCCH of the UE, a power control manner determining component in the RNS is configured to determine, according to the current downlink load condition of a cell, which power control manner is adopted to adjust the transmitting power of the DL-DPCCH of the base station.

With the method and device for controlling downlink power provided in the present disclosure, different power control manners are adopted according to the downlink load condition of a cell. When the downlink load is lighter, a mobile station receives a relatively better wireless signal; the adoption of a fast power control manner in which a shorter time interval is needed for a TPC command to take effect can ensure a better quality of service. When the downlink load is heavier, due to a cause of a downlink interface, the mobile station receives a relatively worse wireless signal; at this time, the adoption of a slow power control manner in which a longer time interval is needed for the TPC command to take effect can effectively reduce the downlink interference and meanwhile improve the network capacity.

Through the above description of specific implementations, deeper and more detailed understanding is obtained about the technical means employed by the present disclosure to achieve a desired purpose and the benefits achieved by the present disclosure; however, the accompanying drawings and description do not limit the present disclosure, which is only limited by the appended claims.

## Claims

1. A method for controlling downlink power, comprising:
according to a current downlink load condition of a cell, adopting a corresponding power control manner to control transmitting power of a Downlink Dedicated Physical Channel, DL_DPCH, of a base station (S103), wherein the power control manner comprises setting a time interval during which received Transmitting Power Control, TPC, commands are merged into one final TPC command which takes effect at the end of the interval, further comprising:
setting in advance a corresponding relationship between a proportion of a carrier transmitting power of the at least one non-High speed channel of the cell to a maximum transmitting power of the cell and the power control manner;
determining the corresponding power control manner according to a proportion of a current carrier transmitting power of the at least one non-High speed channel of the cell to the maximum transmitting power of the cell, to control the transmitting power of the DL_DPCH of the base station,
wherein the corresponding power control manner comprises:
setting the time interval, wherein the time interval increases with the proportion of the carrier transmitting power of the at least one non-High speed channel of the cell to the maximum transmitting power of the cell, and the time interval is adapted to comprise an odd number of time slots; and taking as the
one final TPC command which takes effect at the end of the interval a most repeated TPC bit from the received TPC commands in the time interval.

2. The method as claimed in claim 1, wherein acquiring the current downlink load condition of the cell comprises:
acquiring for each cell, from the base station, the
current carrier transmitting power of at least one non-High speed channel of the cell and the
preset maximum transmitting power of the cell, taking the
proportion of the current carrier transmitting power of the at least one non-High speed channel of the cell to the preset maximum transmitting power of the cell as the current downlink load condition of the cell.

3. The method as claimed in claim 2, wherein determining the carrier transmitting power of the at least one non-High speed channel of the cell comprises:
acquiring, from the base station, a
real-time carrier transmitting power of the cell and
a
carrier transmitting power of at least one High speed channel of the cell
subtracting the carrier transmitting power of the at least one High speed channel of the cell from the real-time carrier transmitting power of the cell to obtain the carrier transmitting power of the at least one non-High speed channel of the cell.

4. A device for controlling downlink power, located in a Radio Network Controller, RNC, or in a base station, comprising: a power control manner determining component (300), configured to adopt, according to a current downlink load condition of a cell, a corresponding power control manner to control transmitting power of a Downlink Dedicated Physical Channel, DL_DPCH, of the base station, wherein the power control manner comprises setting a time interval during which received Transmitting Power Control, TPC, commands are merged into one final TPC command which takes effect at the end of the time interval, further comprising:
a presetting component, configured to set in advance a corresponding relationship between a proportion of a carrier transmitting power of the at least one non-High speed channel of the cell to a maximum transmitting power of the cell and the power control manner;
the power control manner determining component is further configured to determine the corresponding power control manner according to a proportion of a current carrier transmitting power of the at least one non-High speed channel of the cell to the maximum transmitting power of the cell, to control the transmitting power of the DL_DPCH of the base station,
wherein the presetting component is further configured to:
set the time interval, wherein the time interval increases with the proportion of the carrier transmitting power of the at least one non-High speed channel of the cell to the maximum transmitting power of the cell, and the time interval is adapted to comprise an odd number of time slots; and wherein the merging comprises taking as the one final TPC command a most repeated TPC bit from the received TPC commands in the time interval.

5. The device as claimed in claim 4, further comprising:
a load condition acquiring component, configured to acquire for each cell, from the base station, the
current carrier transmitting power of at least one non-High speed channe of the cell and the
preset maximum transmitting power of the cell, and to take a proportion of the current carrier transmitting power of the at least one non-High speed channel of the cell to the preset maximum transmitting power of the cell as the current downlink load condition of the cell.

6. The device as claimed in claim 5, wherein the load condition acquiring component is further configured to: acquire, from the base station, a real-time carrier
transmitting power of the cell and a carrier transmitting power of at least one High speed
channel of the cell; subtract the carrier transmitting power of the at least one High speed channel of the cell from the real-time carrier transmitting power of the cell to obtain the carrier transmitting power of the at least one non-High speed channel of the cell.

## Patentansprüche

1. Verfahren zur Downlink-Leistungssteuerung, umfassend:
gemäß eines aktuellen Downlink-Lastzustands einer Zelle, Annehmen einer entsprechenden Leistungssteuerungsart, um die Sendeleistung eines dedizierten physischen Downlink-Kanals (Downlink Dedicated Physical Channel, DL_DPCH) einer Basisstation (S103) zu steuern, wobei die Leistungssteuerungsart das Einstellen eines Zeitintervalls umfasst, während dessen empfangene Sendeleistungssteuerungsbefehle (Transmitting Power Control, TPC) zu einem endgültigen TPC-Befehl zusammengeführt werden, der am Ende des Intervalls wirksam wird, ferner umfassend:
vorab Einstellen einer entsprechenden Beziehung zwischen einem Verhältnis einer Trägersendeleistung des mindestens einen Nicht-Hochgeschwindigkeitskanals der Zelle zu einer maximalen Sendeleistung der Zelle und der Leistungssteuerungsart;
Bestimmen der entsprechenden Leistungssteuerungsart gemäß einem Verhältnis einer aktuellen Trägersendeleistung des mindestens einen Nicht-Hochgeschwindigkeitskanals der Zelle zu der maximalen Sendeleistung der Zelle, um die Sendeleistung des DL_DPCH der Basisstation zu steuern,
wobei die entsprechende Leistungssteuerungsart umfasst:
Einstellen des Zeitintervalls, wobei das Zeitintervall mit dem Verhältnis der Trägersendeleistung des mindestens einen Nicht-Hochgeschwindigkeitskanals der Zelle zur maximalen Sendeleistung der Zelle zunimmt und das Zeitintervall so angepasst ist, dass es eine ungerade Anzahl von Zeitschlitzen umfasst; und Nehmen eines am häufigsten wiederholten TPC-Bits aus den empfangenen TPC-Befehlen im Zeitintervall als den einen letzten TPC-Befehl, der am Ende des Intervalls wirksam wird.

2. Verfahren nach Anspruch 1, wobei das Erfassen des aktuellen Downlink-Lastzustands der Zelle umfasst:
Erfassen der aktuellen Trägersendeleistung mindestens eines Nicht-Hochgeschwindigkeitskanals der Zelle und der voreingestellten maximalen Sendeleistung der Zelle für jede Zelle von der Basisstation, wobei das Verhältnis der aktuellen Trägersendeleistung des mindestens einen Nicht-Hochgeschwindigkeitskanals der Zelle zu der voreingestellten maximalen Sendeleistung der Zelle als aktueller Downlink-Lastzustand der Zelle genommen wird.

3. Verfahren nach Anspruch 2, wobei das Bestimmen der Trägersendeleistung des mindestens einen Nicht-Hochgeschwindigkeitskanals der Zelle umfasst:
Erfassen einer Echtzeit-Trägersendeleistung der Zelle und einer Trägersendeleistung von mindestens einem Hochgeschwindigkeitskanal der Zelle von der Basisstation;
Subtrahieren der Trägersendeleistung des mindestens einen Hochgeschwindigkeitskanals der Zelle von der Echtzeit-Trägersendeleistung der Zelle, um die Trägersendeleistung des mindestens einen Nicht-Hochgeschwindigkeitskanals der Zelle zu erhalten.

4. Vorrichtung zur Downlink-Leistungssteuerung, die sich in einer Funknetzsteuerung (Radio Network Controller, RNC) oder in einer Basisstation befindet, umfassend:
eine Leistungssteuerungsart-Bestimmungskomponente (300), die so konfiguriert ist, dass sie gemäß einem aktuellen Downlink-Lastzustand einer Zelle eine entsprechende Leistungssteuerungsart annimmt, um die Sendeleistung eines dedizierten physischen Downlink-Kanals (Downlink Dedicated Physical Channel, DL_DPCH) der Basisstation zu steuern, wobei die Leistungssteuerungsart das Einstellen eines Zeitintervalls umfasst, während dessen empfangene Sendeleistungssteuerungsbefehle (Transmitting Power Control, TPC) zu einem endgültigen TPC-Befehl zusammengeführt werden, der am Ende des Zeitintervalls wirksam wird, ferner umfassend:
eine Voreinstellungskomponente, die so konfiguriert ist, dass sie vorab eine entsprechende Beziehung zwischen einem Verhältnis einer Trägersendeleistung des mindestens einen Nicht-Hochgeschwindigkeitskanals der Zelle zu einer maximalen Sendeleistung der Zelle und der Leistungssteuerungsart einstellt;
die Komponente zum Bestimmen der Leistungssteuerungsart ferner konfiguriert ist, um die entsprechende Leistungssteuerungsart gemäß einem Verhältnis einer aktuellen Trägersendeleistung des mindestens einen Nicht-Hochgeschwindigkeitskanals der Zelle zu der maximalen Sendeleistung der Zelle zu bestimmen, um die Sendeleistung des DL_DPCH der Basisstation zu steuern,
wobei die Voreinstellungskomponente ferner konfiguriert ist zum:
Einstellen des Zeitintervalls, wobei das Zeitintervall mit dem Verhältnis der Trägersendeleistung des mindestens einen Nicht-Hochgeschwindigkeitskanals der Zelle zur maximalen Sendeleistung der Zelle zunimmt und das Zeitintervall so angepasst ist, dass es eine ungerade Anzahl von Zeitschlitzen umfasst; und wobei das Zusammenführen umfasst, dass als der eine letzte TPC-Befehl ein am häufigsten wiederholtes TPC-Bit aus den empfangenen TPC-Befehlen in dem Zeitintervall genommen wird.

5. Vorrichtung nach Anspruch 4, ferner umfassend:
eine Lastzustandserfassungskomponente, die so konfiguriert ist, dass sie für jede Zelle von der Basisstation die aktuelle Trägersendeleistung mindestens eines Nicht-Hochgeschwindigkeitskanals der Zelle und die voreingestellte maximale Sendeleistung der Zelle erfasst und ein Verhältnis der aktuellen Trägersendeleistung des mindestens einen Nicht-Hochgeschwindigkeitskanals der Zelle zu der voreingestellten maximalen Sendeleistung der Zelle als den aktuellen Downlink-Lastzustand der Zelle verwendet.

6. Vorrichtung nach Anspruch 5, wobei die Lastzustandserfassungskomponente ferner so konfiguriert ist, dass sie von der Basisstation eine Echtzeit-Trägersendeleistung der Zelle und eine Trägersendeleistung von mindestens einem Hochgeschwindigkeitskanal der Zelle erfasst; die Trägersendeleistung des mindestens einen Hochgeschwindigkeitskanals der Zelle von der Echtzeit-Trägersendeleistung der Zelle subtrahiert, um die Trägersendeleistung des mindestens einen Nicht-Hochgeschwindigkeitskanals der Zelle zu erhalten.

## Revendications

1. Procédé pour la commande d'une puissance de liaison descendante, comprenant :
selon une condition de charge de liaison descendante actuelle d'une cellule, l'adoption d'un mode de commande de puissance correspondant pour commander une puissance d'émission d'un canal physique dédié de liaison descendante, DL_DPCH, d'une station de base (S103), dans lequel le mode de commande de puissance comprend la définition d'un intervalle temporel pendant lequel des consignes de commande de puissance d'émission, TPC, reçues sont fusionnées en une consigne de TPC finale qui prend effet à la fin de l'intervalle, comprenant en outre :
la définition à l'avance d'une relation correspondante entre une proportion d'une puissance d'émission de porteuse de l'au moins un canal non à haute vitesse de la cellule par rapport à une puissance d'émission maximale de la cellule et le mode de commande de puissance ;
la détermination du mode de commande de puissance correspondant selon une proportion d'une puissance d'émission de porteuse actuelle de l'au moins un canal non à haute vitesse de la cellule par rapport à la puissance d'émission maximale de la cellule, pour commander la puissance d'émission du DL_DPCH de la station de base,
dans lequel le mode de commande de puissance correspondant comprend :
la définition de l'intervalle temporel, dans lequel l'intervalle temporel augmente avec la proportion de la puissance d'émission de porteuse de l'au moins un canal non à haute vitesse de la cellule par rapport à la puissance d'émission maximale de la cellule, et
l'intervalle temporel est adapté pour comprendre un nombre impair de créneaux temporels ; et la prise,
comme la consigne de TPC finale qui prend effet à la fin de l'intervalle, d'un bit de TPC le plus répété à partir des consignes de TPC reçues dans l'intervalle temporel.

2. Procédé selon la revendication 1, dans lequel l'acquisition de la condition de charge de liaison descendante actuelle de la cellule comprend :
l'acquisition pour chaque cellule, à partir de la station de base, de la puissance d'émission de porteuse actuelle d'au moins un canal non à haute vitesse de la cellule et de la puissance d'émission maximale prédéfinie de la cellule, la prise de la proportion de la puissance d'émission de porteuse actuelle de l'au moins un canal non à haute vitesse de la cellule par rapport à la puissance d'émission maximale prédéfinie de la cellule comme la condition de charge de liaison descendante actuelle de la cellule.

3. Procédé selon la revendication 2, dans lequel la détermination de la puissance d'émission de porteuse de l'au moins un canal non à haute vitesse de la cellule comprend :
l'acquisition, à partir de la station de base, d'une puissance d'émission de porteuse en temps réel de la cellule et d'une puissance d'émission de porteuse d'au moins un canal à haute vitesse de la cellule ;
la soustraction de la puissance d'émission de porteuse de l'au moins un canal à haute vitesse de la cellule à partir de la puissance d'émission de porteuse en temps réel de la cellule pour obtenir la puissance d'émission de porteuse de l'au moins un canal non à haute vitesse de la cellule.

4. Dispositif pour la commande d'une puissance de liaison descendante, situé dans un dispositif de commande de réseau radio, RNC, ou dans une station de base, comprenant :
un composant de détermination de mode de commande de puissance (300), configuré pour adopter, selon une condition de charge de liaison descendante actuelle d'une cellule, un mode de commande de puissance correspondant pour commander une puissance d'émission d'un canal physique dédié de liaison descendante, DL_DPCH, de la station de base, dans lequel le mode de commande de puissance comprend la définition d'un intervalle temporel pendant lequel des consignes de commande de puissance d'émission, TPC, reçues sont fusionnées en une consigne de TPC finale qui prend effet à la fin de l'intervalle temporel, comprenant en outre :
un composant de définition préalable, configuré pour définir à l'avance une relation correspondante entre une proportion d'une puissance d'émission de porteuse de l'au moins un canal non à haute vitesse de la cellule par rapport à une puissance d'émission maximale de la cellule et le mode de commande de puissance ;
le composant de détermination de mode de commande de puissance est en outre configuré pour déterminer le mode de commande de puissance correspondant selon une proportion d'une puissance d'émission de porteuse actuelle de l'au moins un canal non à haute vitesse de la cellule par rapport à la puissance d'émission maximale de la cellule, pour commander la puissance d'émission du DL_DPCH de la station de base,
dans lequel le composant de définition préalable est en outre configuré pour :
définir l'intervalle temporel, dans lequel l'intervalle temporel augmente avec la proportion de la puissance d'émission de porteuse de l'au moins un canal non à haute vitesse de la cellule par rapport à la puissance d'émission maximale de la cellule, et
l'intervalle temporel est adapté pour comprendre un nombre impair de créneaux temporels ; et dans lequel la fusion comprend la prise, comme la consigne de TPC finale, d'un bit de TPC le plus répété à partir des consignes de TPC reçues dans l'intervalle temporel.

5. Dispositif selon la revendication 4, comprenant en outre :
un composant d'acquisition de condition de charge, configuré pour acquérir pour chaque cellule, à partir de la station de base, la puissance d'émission de porteuse actuelle d'au moins un canal non à haute vitesse de la cellule et la puissance d'émission maximale prédéfinie de la cellule, et pour prendre une proportion de la puissance d'émission de porteuse actuelle de l'au moins un canal non à haute vitesse de la cellule par rapport à la puissance d'émission maximale prédéfinie de la cellule comme la condition de charge de liaison descendante actuelle de la cellule.

6. Dispositif selon la revendication 5, dans lequel le composant d'acquisition de condition de charge est en outre configuré pour : acquérir, à partir de la station de base, une puissance d'émission de porteuse en temps réel de la cellule et une puissance d'émission de porteuse d'au moins un canal à haute vitesse de la cellule ; soustraire la puissance d'émission de porteuse de l'au moins un canal à haute vitesse de la cellule à partir de la puissance d'émission de porteuse en temps réel de la cellule pour obtenir la puissance d'émission de porteuse de l'au moins un canal non à haute vitesse de la cellule.
